# EUROPEAN PATENT SPECIFICATION

(11) **EP 1 229 694 B1**
(45) Date of publication and mention of the grant of the patent: **01.08.2007**
(21) Application number: 02002272.9
(22) Date of filing: 30.01.2002
(51) Int. Cl.: H04L 12/56, H04L 12/28, H04L 29/06, H04L 29/08

(54) **Routing notifications to mobile devices through a high capacity channel**
Übertragung von Meldungen zu mobilen Vorrichtungen durch einen Kanal mit hoher Kapazität
Transmission de notifications à des dispositifs mobiles à travers un canal à haute capacité

(30) Priority: 31.01.2001 US 774407
(43) Date of publication of application: 07.08.2002
(73) Proprietor: MICROSOFT CORPORATION, Redmond, WA 98052 (US)
(72) Inventor: Flanagin, Stephen D., Sammamish, Washington 98075 (US)
(74) Representative: Grünecker, Kinkeldey, Stockmair & Schwanhäusser Anwaltssozietät

(56) References cited:
- EP-A- 0 987 866
- WO-A-00/11585
- WO-A-00/64110
- DE-A- 19 819 802
- FRODIGH M ET AL: "WIRELESS AD HOC NETWORKING-THE ART OF NETWORKING WITHOUT A NETWORK" ON - ERICSSON REVIEW, ERICSSON. STOCKHOLM, SE, vol. 77, no. 4, 2000, pages 248-263, XP000969933 ISSN: 0014-0171

## Description

### BACKGROUND OF THE INVENTION

### 1. The Field of the Invention

The present invention relates to notifications for wireless devices. More particularly, the present invention relates to systems, methods, and computer program products for routing notifications to wireless devices over high capacity channels and more specifically for re-routing notifications to wireless devices over high capacity channels when they are available to the wireless device.

### 2. Background and Related Art

Wireless devices, such as cellular telephones, pagers, and personal digital assistants (PDAs) are quite common and their use and importance are increasing daily. For example, cellular telephones were originally intended for voice communication. Today, cellular telephones are being used to receive and store electronic messages, calendar data, and contact lists. Some wireless devices even allow a user to access the Internet in limited ways. The ever increasing capabilities of wireless devices are placing a strict demand on the systems that deliver information to wireless devices. Unfortunately, current delivery systems are often unable to satisfactorily meet the delivery requirements of newer wireless devices.

Much of the information currently stored by wireless devices, such as electronic messages and appointments, has a tendency to become stale, old, or no longer needed. As a result, it is often necessary to update the stored data. An update is necessary, for example, when a new electronic message arrives or when new appointments are added to the calendar data.

Historically, devices are updated by connecting with a server and performing a 'batch' synchronization to update both the device and the server. Batch synchronization updates all changes since the last synchronization and is usually performed over a dial-up connection or Local Area Network connections that have attributes of higher throughput, reliability and low cost. As an alternative, each individual change can be sent to the device (or from the device to the server) when the change occurs. This approach has the advantage of being automatic. In addition, the data stored on the device is substantially current. This approach, however, requires that these updates or 'notifications' be delivered to the device asynchronously, wherever the device may be located.

Currently, delivering data to and from wireless devices uses short messaging system (SMS) or related technologies. SMS was originally designed for devices such as pagers, where the electronic traffic is limited to short textual messages. SMS has a relatively low capacity to transmit data, can be costly, and can have high latency. SMS is often used to send a short message to another wireless device, receive a notification from a network that a voicemail has been stored, and the like. While SMS is ill suited to support systems and methods that generate substantially higher data traffic, it does have the desirable characteristics of having fairly global coverage already in place and is usually available for small information transfers at a nominal cost.

WO-A-0011585 discloses an electronic mail notification system where an e-mail service system is connected to a local client device via a primary communications link, and a secondary relative low-bandwidth continuous communications link. The relatively high-bandwidth bidirectional communications path is described to be a link suitable for retrieving e-mail messages fairly rapidly whereas the secondary communications path is described to be a link suitable for relatively low cost transmission of notifications. The local client device continuously monitors the secondary communications link for e-mail notifications. Upon receiving a notification, the e-mail messages are retrieved over the primary communications link. This may be initiated manually or automatically.

DE-A-19819802 discloses a method and an apparatus for a wireless e-mail pager for local networks. In case of an incoming e-mail, the server forwards the e-mail to all radio base stations of all computers in the network. Then, a wireless connection to the wireless e-mail pager is established by one of the radio base stations. Once the e-mail has been forwarded to the pager, an acknowledgement message is returned.

EP-A-0987866 discloses a connection unit and a method for setting up a data connection. A proxy server selects the suitable link. For the specific requirements of a data link when providing internet services, the data link may be realized using two access techniques. The first access may be a conventional dial-in technique. The second access to the internet may be chargeable. The technique is described to set up a separate data connection dependent on the requested data elements.

WO-A-0064110 describes a method for delivering messages in a network consisting of a terminal and a messaging functionality. A notification about the presence of a message is sent from the messaging functionality to the terminal. The terminal then decides how to handle the received message and replies to the notification sent by the messaging functionality. The message is then handled by the messaging functionality according to the instructions received from the terminal.

It is the object of the invention to provide a method, system and device for routing notifications using high capacity channels in a more efficient way.

This object is solved by the invention as claimed in the independent claims.

Preferred embodiments are defined in the dependent claims.

Accordingly, the present invention is directed towards routing notifications over higher capacity channels when the higher capacity channels are available. When data at a server changes, a notification is sent to a wireless device. The notification can either notify the wireless device that an object at the server has changed or include the changed object in the notification. For example, when a new email arrives at a server, the notification can either inform the wireless device that a new email is at the server or the notification can include the new email. As previously described, the notification usually occurs over a low capacity wireless channel that is often slow, costly and inherently latent.

The present invention effectively causes notifications to be routed over higher capacity and less costly channels when the higher capacity channels are available to the wireless devices instead of using the more costly lower capacity channel. For example, many wireless devices have the ability to dock or connect with a desktop computer or other network device when the user is in their office or home. Many desktop computers have access to a Local Area Network (LAN) or the Internet, and when a wireless device is docked or in communication with the desktop computer or its LAN, the wireless device advises the notification server that a higher capacity channel is available through the desktop computer and its network connection. When the notification server is aware that the wireless device has access to a higher capacity channel, notifications are routed to the wireless device over the higher capacity channel. As long as the wireless device has access to the higher capacity channel, notifications can be sent quickly, inexpensively, and more efficiently.

Access to the higher capacity channel, however, can be terminated abruptly. Removing the wireless device from its docking station, for example, may immediately cut off access to the higher capacity channel. When the wireless device no longer has access to the higher capacity channel, the notification server resumes sending notifications over the lower capacity SMS wireless channel as before.

Detecting that the higher capacity channel is no longer available can be performed in several different ways. While docked, for example, the wireless device can be required to send an acknowledgement to the notification server for each notification that the wireless device receives. If an acknowledgement is not received by the notification server within a pre-determined time period, the notification server resumes sending notifications over the lower capacity channel. Alternatively, the characteristics of the higher capacity channel can be used to determine if the higher capacity channel is still available. For instance, if Transmission Control Protocol/Intemet Protocol (TCP/IP) is used, then the severance of the higher capacity channel is detected when the socket is dropped. In another example, the wireless device can send a notification to the server that the connection has been severed. In each case, notifications are again sent over the low capacity channel until a higher capacity channel becomes available.

Additional features and advantages of the invention will be set forth in the description which follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims; or may be learned by the practice of the invention as set forth hereinafter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:
Figure 1 illustrates an exemplary system that provides a suitable operating environment for the present invention;
Figure 2 is a block diagram illustrating a server that communicates with a wireless device over a high capacity channel when the high capacity channel is available and over a low capacity channel otherwise; and
Figure 3 is a more detailed block diagram of the communication channels over which a server may communicate with a wireless device.

### DETAILED DESCRIPTION OF THE INVENTION

Communication with a wireless device can be a costly and relatively slow process. The present invention relates to systems and methods that allow communication with a wireless device to occur over channels that have higher capacity than the default low capacity channel when the higher capacity channels are available. When a higher capacity channel is available, a notification server reroutes notifications to a wireless device over the higher capacity channel. The notification server resumes employing the low capacity channel when the higher capacity channel is no longer available. This provides significant advantages. First, the higher capacity channel has a much lower cost in comparison to the low capacity channels currently employed by wireless devices. The higher capacity channel also provides more bandwidth and is more reliable. Because the higher capacity channel is not always available to the wireless device, the lower capacity channel is frequently used to ensure continuous update capability to the wireless device.

As used herein "notification" refers to communication with a wireless device and can refer to both incoming and outgoing communications. Notifications typically occur when an object is created or modified. Thus, when an object on a server changes, the wireless device receives a notification. The notification can simply inform the wireless device that an object has been created, modified, or otherwise changed or the notification can include the created or modified object. A notification is usually associated with a single data object, but as used herein, notification may be associated with more than one data object.

As used herein "high capacity channels" infers higher bandwidth with respect to "low capacity channels." However, high capacity channel can also refer to one or more of higher capacity, less cost, increased reliability, and less latency with respect to low capacity channel.

The present invention extends to both systems and methods for routing notifications to wireless devices. The embodiments of the present invention may comprise a special purpose or general purpose computer including various computer hardware, as discussed in greater detail below. Embodiments within the scope of the present invention also include computer-readable media for carrying or having computer-executable instructions or data structures stored thereon. Such computer-readable media can be any available media which can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

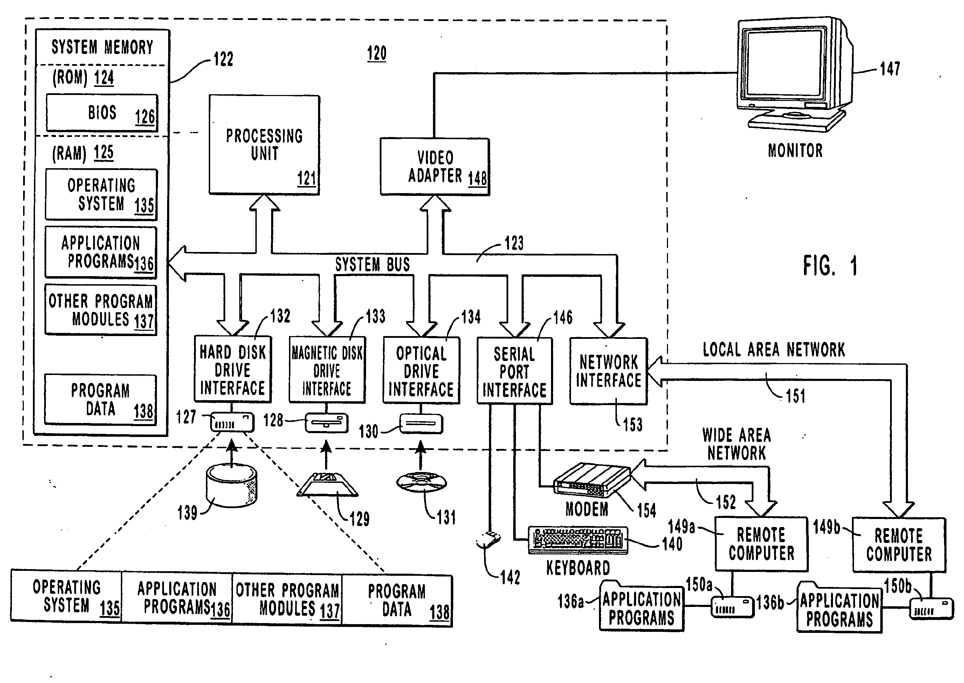

Figure 1 and the following discussion are intended to provide a brief, general description of a suitable computing environment in which the invention may be implemented. Although not required, the invention will be described in the general context of computer-executable instructions, such as program modules, being executed by computers in network environments. Generally, program modules include routines, programs, objects, components, data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represent examples of corresponding acts for implementing the functions described in such steps.

Those skilled in the art will appreciate that the invention may be practiced in network computing environments with many types of computer system configurations, including personal computers, hand-held devices, multi-processor systems, microprocessor-based or programmable consumer electronics, cellular telephones, pagers, personal digital assistants, network or desktop PCs, minicomputers, mainframe computers, and the like. The invention may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices. Those skilled in the art will also appreciate that some computer system configurations, such as cellular telephones, pagers, and the like are not required to have each component illustrated in Figure 1 in order to qualify as a computer environment in which the present invention may be implemented. For this reason, many devices, including but not limited to, cellular telephones, PDAs, pagers and the like, qualify as a computer as described herein. In addition, a computer as described herein is not limited to the components illustrated in Figure 1.

With reference to Figure 1, an exemplary system for implementing the invention includes a general purpose computing device in the form of a conventional computer 20, including a processing unit 21, a system memory 22, and a system bus 23 that couples various system components including the system memory 22 to the processing unit 21. The system bus 23 may be any of several types of bus structures including a memory bus or memory controller, a peripheral bus, and a local bus using any of a variety of bus architectures. The system memory includes read only memory (ROM) 24 and random access memory (RAM) 25. A basic input/output system (BIOS) 26, containing the basic routines that help transfer information between elements within the computer 20, such as during start-up, may be stored in ROM 24.

The computer 20 may also include a magnetic hard disk drive 27 for reading from and writing to a magnetic hard disk 39. a magnetic disk drive 28 for reading from or writing to a removable magnetic disk 29, and an optical disk drive 30 for reading from or writing to removable optical disk 31 such as a CD-ROM or other optical media. The magnetic hard disk drive 27, magnetic disk drive 28, and optical disk drive 30 are connected to the system bus 23 by a hard disk drive interface 32, a magnetic disk drive-interface 33, and an optical drive interface 34, respectively. The drives and their associated computer-readable media provide nonvolatile storage of computer-executable instructions, data structures, program modules and other data for the computer 20. Although the exemplary environment described herein employs a magnetic hard disk 39, a removable magnetic disk 29 and a removable optical disk 31, other types of computer readable media for storing data can be used, including magnetic cassettes, flash memory cards, digital versatile disks, Bernoulli cartridges, RAMs, ROMs, and the like.

Program code means comprising one or more program modules may be stored on the hard disk 39, magnetic disk 29, optical disk 31, ROM 24 or RAM 25, including an operating system 35, one or more application programs 36, other program modules 37, and program data 38. A user may enter commands and information into the computer 20 through keyboard 40, pointing device 42, or other input devices (not shown), such as a microphone, joy stick, game pad, satellite dish, scanner, or the like. These and other input devices are often connected to the processing unit 21 through a serial port interface 46 coupled to system bus 23. Alternatively, the input devices may be connected by other interfaces, such as a parallel port, a game port or a universal serial bus (USB). A monitor 47 or another display device is also connected to system bus 23 via an interface, such as video adapter 48. In addition to the monitor, personal computers typically include other peripheral output devices (not shown), such as speakers and printers.

The computer 20 may operate in a networked environment using logical connections to one or more remote computers, such as remote computers 49a and 49b. Remote computers 49a and 49b may each be another personal computer, a server, a router, a network PC, a peer device or other common network node, and typically include many or all of the elements described above relative to the computer 20, although only memory storage devices 50a and 50b and their associated application programs 36a and 36b have been illustrated in Figure 1. The logical connections depicted in Figure 1 include a local area network (LAN) 51 and a wide area network (WAN) 52 that are presented here by way of example and not limitation. Such networking environments are commonplace in office-wide or enterprise-wide computer networks, intranets and the Internet.

When used in a LAN networking environment, the computer 20 is connected to the local network 51 through a network interface or adapter 53. When used in a WAN networking environment, the computer 20 may include a modem 54, a wireless link, or other means for establishing communications over the wide area network 52, such as the Internet. The modem 54, which may be internal or external, is connected to the system bus 23 via the serial port interface 46. In a networked environment, program modules depicted relative to the computer 20, or portions thereof, may be stored in the remote memory storage device. It will be appreciated that the network connections shown are exemplary and other means of establishing communications over wide area network 52 may be used.

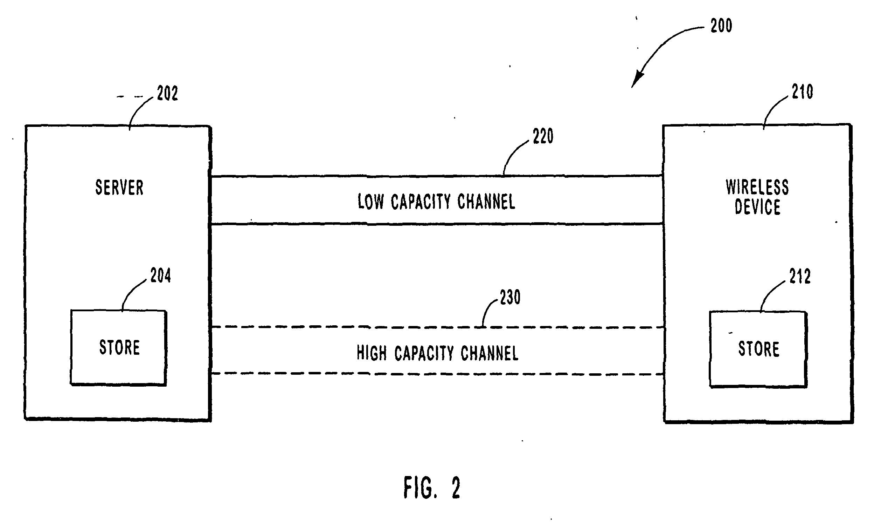

Figure 2 is a block diagram that generally illustrates an environment wherein the present invention may be implemented. Figure 2 illustrates a system 200 that includes a server 202 and a wireless device 210. Exemplary wireless devices include, but are not limited to, cellular telephones, pagers, personal digital assistants (PDAs), Web TVs, Internet appliances, and the like. The server 202 has a store 204 and the wireless device 210 has a store 212. The store 204 typically has significantly more storage capacity than the store 212 and the store 204 is often used by multiple wireless devices as well as other computers. The server 202 is often part of a local area network (LAN). However, Figure 2 is intended to represent an instance where the server 202 is accessed by a wireless device. It is understood that the server 202 can be part of many other computer networks or other system configurations.

Often, it is necessary for the server 202 to communicate with or send a notification to the wireless device 210. This can occur, for example, when a new electronic message arrives at the server 202, or more generally, when an object stored at the server 202 changes. Changes to objects include, but are not limited to, deleting an object, creating an object, moving an object, modifying an object, and the like. When a change to an object occurs, a notification is generated at the server 202 and transmitted to the wireless device 212. As previously stated, the notification can simply advise the wireless device 210 of the change to the object or the notification can actually contain the changed object. In the case of email, for example, the notification can inform the wireless device 210 that a new mail message is stored at the server 202 or the notification can include the new mail message. In the first instance, a user of the wireless device 210 is required to retrieve the new mail message. It is understood by one of skill in the art that the notification sent to the wireless device 210 is not limited to email, but can include any data, including but not limited to, calendar data, documents, and the like.

In order to keep the device continuously up to date, notifications are sent to the wireless device 210 over a channel that is always available. A wireless Short Messaging Service (SMS) or like technology channel is typically used because it can usually deliver a notification message even though it has a lower transmission capacity. SMS describes the ability to send and receive small text messages (on the order of 160 characters) to the wireless device 210. SMS, or more generally, the low capacity channel 220, is not conducive to sending or receiving long messages. In addition to being restricted to short messages, SMS and similar wireless protocols can incur additional cost to the user, especially if it is used to send large messages.

Figure 2 also illustrates a high capacity channel 230 that provides for communication between the server 202 and the wireless device 210. While the high capacity channel 230 overcomes the limitations of the low capacity channel 220, the high capacity channel 230 is not always available for use in the system 200. However, notifications are sent over the high capacity channel 230 instead of the low capacity channel 220 whenever the high capacity channel 230 is available to the wireless device 210. This enables more data to be sent more quickly and more efficiently with less cost. Full synchronization between the wireless device 210 and the server 202 can also occur more efficiently over the high capacity channel 230. In addition, the cost of using the high capacity channel 230 is often significantly lower than the cost associated with the low capacity channel 220.

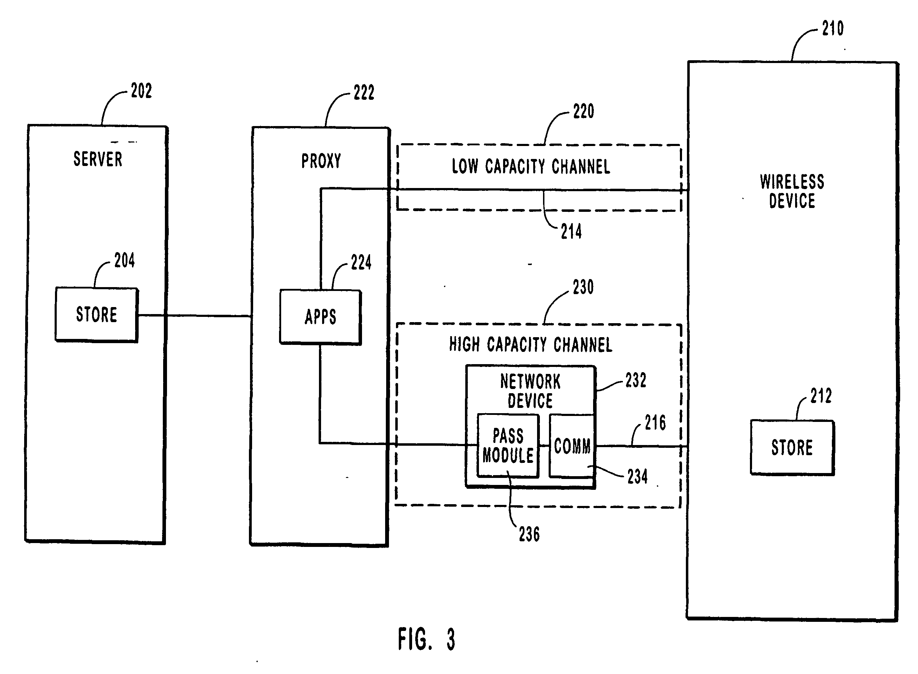

Figure 3 is a block diagram that more fully illustrates a wireless device that communicates with a server over a high capacity channel 230 or a low capacity channel 220. The low capacity channel 220 often includes a proxy 222 as an intermediary between the wireless device 210 and the server 202. The communication link 206 can be the Internet, a Local Area Network (LAN), and the like, but can also include wireless networks.

The proxy 222 communicates with the wireless device 210 over a wireless communication link 214 that is often provided by a wireless carrier. The communication link 214 often employs Short Messaging Service (SMS) or related technologies, which generally describe the ability to send small text messages over a wireless communication link. Because of the nature of wireless communications, there is no guarantee that message sent using SMS will actually arrive at the wireless device 210, but the nature of SMS coverage and buffering usually ensures the small SMS message will be delivered to the device in a timely manner. While SMS is useful in some circumstances, it is significantly less useful when the update is substantially larger than messages typically sent with SMS. These types of updates, for example, occur when the wireless device 210 and the server 202 synchronize the stores 204 and 212. Larger updates can also occur when sending calendar data or electronic messages that are longer than the messages permitted by SMS.

The proxy 222 includes applications (apps) 224 that assist in the process of sending a notification to the wireless device 210. The applications 224 include a format module and a wireless channel module. The format module formats the notification for the intended client device, which is the wireless device 210 in this case. The wireless channel module processes the notification such that the notification is compatible with the transmission channel, which may be, for example, SMS.

Figure 3 also illustrates a network device 232. The network device 232 is capable of communicating with the proxy 222 over the Internet, a LAN, and the like. The network device 232 becomes part of the high capacity channel 230 when the wireless device 210 is capable of communication with the network device 232. For example, the wireless device 210 may be a personal digital assistant (PDA), a cellular telephone or other wireless device that is capable of docking or otherwise connecting with a network device such as a desktop computer. When the PDA is docked or otherwise connected with the desktop computer, the PDA has access to the desktop computer over a communication link 216 through communication port 234, which may be a serial port, a universal serial bus port, an infrared port, Bluetooth Personal Area Wireless connection, and the like. The communication link 216 has higher bandwidth than the communication link 214 and is significantly faster and less expensive.

When the wireless device 210 is docked with the network device 232, the wireless device 210 notifies the proxy 222 that notifications or updates can be sent through the network device 232 instead of over the communication link 214. This has the advantages of lower cost and significantly higher bandwidth. The wireless device 210 notifies the proxy 222 that it can use the new high capacity channel 230 and the proxy 222 is provided with a return address where notifications and updates can now be sent. In this case, the proxy 222 is provided with the address of the network device 232 or the pass module 236. In the proxy 222, a network channel module, which is included in the applications 224, formats the updates or the notifications for the higher capacity channel or communication link, which may be an Ethernet connection, the Internet, and the like. A pass module 236 passes the notifications or updates received from the proxy 222 through the network device 232 to the wireless device 210 over the communication link 216.

When the wireless device 210 has access to high speed networks through the network device 232, the proxy 222 and the server 202 are effectively notified of this fact through the network device 232. At this point, the proxy 222 re-routes or directs the notifications and updates over the high capacity channel 230. From the perspective of the server 202, notifications and updates are still sent to the proxy 222. In this manner, the notifications and updates are rerouted through the network device 232 instead of over the wireless communication link 214.

Because the proxy 222 is re-routing or re-directing the notifications, the proxy 222 is usually responsible for detecting when the high capacity channel is no longer available to the wireless device 210 with respect to notifications and updates. The connection between the wireless device 210 and the network device 232 can terminate abruptly. For example, a PDA or wireless phone can simply be removed from a docking cradle. Detecting when the link is severed can be accomplished in several ways. The wireless device 210, for instance, may be required to send an acknowledgement to the proxy 222 for each notification that is received over the high capacity channel 230. If no acknowledgement is received, the proxy 222 can assume that the connection has been severed and the proxy 222 will resume sending notifications using the low capacity channel 220. In some instances, the acknowledgement should be received within a particular time period. If TCP/IP is used, then the severance of the communication link will be detected when the socket is dropped or lost. Alternatively, the wireless device 210 can detect when the connection is lost and notify the proxy 222 over the low capacity channel 220 that further notifications should be sent over the low capacity channel 220.

While the present invention has been described with the proxy 222 being an integral part of both the low capacity channel 220 and the high capacity channel 230, it is understood that the proxy 222 could be bypassed in some circumstances when the high capacity channel 230 is available. As described, however, the server 202 is often unaware of which channel is used to transmit the notifications and updates to the wireless device 210. In another embodiment, the network device may have direct access to the server 202 and will, as a result, perform the systems and methods described herein directly with the server 202 instead of through the proxy 222.

The described embodiments are to be considered in all respects only as illustrative and not restrictive. The scope of the invention is, therefore, indicated by the appended claims rather than by the foregoing description.

## Claims

1. A method for routing notifications in a system including a wireless device (210) and a notification server (202), wherein the notification server sends the notifications to the wireless device over a low capacity channel (220), the method being for routing the notifications over a high capacity channel (230) whenever the high capacity channel is available to the wireless device, the method comprising the step of operating the wireless device to perform:
an act of detecting the high capacity channel;
an act of notifying the notification server that the wireless device has access to the high capacity channel; and
an act of receiving the notifications from the notification server over the high capacity channel.

2. The method as defined in claim 1, wherein the act of detecting the high capacity channel further comprises an act of connecting the wireless device with a network device, wherein the wireless device communicates with the network device over a communication link, wherein the act of connecting the wireless device can occur automatically.

3. The method as defined in claim 2, wherein the network device is one of a desktop computer and a bluetooth enabled LAN.

4. The method as defined in claim 2, wherein the communication link is one of a serial link, a universal serial bus link, a wireless bluetooth link and an infrared link.

5. The method as defined in one of claims 1 to 4, wherein the act of detecting the high capacity channel further comprises an act of communicating with a network device over a communication link.

6. The method as defined in one of claims 1 to 5, wherein the act of notifying the notification server comprises an act of sending an access notification to the notification server, wherein the access notification identifies that the high capacity channel is available for notifications sent to the wireless device.

7. The method as defined in one of claims 1 to 6, wherein the act of notifying the notification server further comprises an act of providing the notification server with a new address, wherein the notifications are routed to the new address.

8. The method as defined in one of claims 1 to 7, further comprising an act of detecting that the wireless device no longer has access to the high capacity channel.

9. The method as defined in claim 8, wherein the act of detecting that the wireless device no longer has access to the high capacity channel further comprises an act of sending an acknowledgement to the notification server for each notification received by the wireless device.

10. The method as defined in claim 8 or 9, wherein the act of detecting that the wireless device no longer has access further comprises the act of notifying the notification server over the low capacity channel that notifications can no longer be sent over the high capacity channel.

11. The method as defined in claim 1, further comprising the steps of:
accessing the high capacity channel by the wireless device;
establishing communication over the high capacity channel between the wireless device and the notification server;
sending notifications over the high capacity channel instead of the low capacity channel; and
when access to the high capacity channel terminates, resume sending notifications over the low capacity channel.

12. The method as defined in claim 11, wherein the step for accessing the high capacity channel further comprises:
an act for connecting the wireless device with a network device, wherein the network device has an existing access to the high capacity channel; and
an act of detecting the high capacity channel by the wireless device.

13. The method as defined in claim 11 or 12, wherein the act of establishing communication over the high capacity channel further comprises:
an act of notifying the notification server, by the wireless device, that the wireless device has access to the high capacity channel;
an act of providing the notification server with an address such that the wireless device receives the notifications over the high capacity channel; and
an act of formatting the notifications for transmission over the high capacity channel.

14. The method as defined in one of claims 11 to 13, further comprising a step for determining that the wireless device can no longer receive notifications over the high capacity channel.

15. The method as defined in claim 14, wherein the step for determining that the wireless device can no longer receive notifications over the high capacity channel comprises:
an act of sending an acknowledgement by the wireless device for each notification sent by the notification server; and
an act of determining that the wireless device no longer has access to the high capacity channel if the notification server does not receive a particular acknowledgement for a particular notification within a predetermined time period.

16. The method as defined in one of claims 11 to 15, further comprising a step for resuming the step for sending notifications over the high capacity channel when the wireless device again has access to the high capacity channel.

17. The method as defined in one of claims 11 to 16, further comprising a step for preparing the notification for transmission over the high capacity channel when the wireless device has access to the high capacity channel.

18. The method as defined in one of claims 11 to 17, further comprising a step for preparing the notification for transmission over the low capacity channel when the wireless device does not have access to the high capacity channel.

19. The method as defined in claim 1, wherein the wireless device receives updates from the notification server over the low capacity channel through a proxy server (222), wherein the updates may also be received at the wireless device over the high capacity channel, the method further comprising:
an act of providing the wireless device with access to the high capacity channel through a network device (232) when the wireless device is in communication with the network device;
an act of contacting the proxy server over the high capacity channel to notify the proxy server that the wireless device has access to the high capacity channel; and
an act of receiving notifications from the notification server over the high capacity channel until the wireless device no longer has access to the high capacity channel, wherein the notification are re-routed by the proxy server over the high capacity channel.

20. The method as defined in claim 19, further comprising an act of receiving notifications over the low capacity channel when the high capacity channel is not available to the wireless device.

21. The method as defined in claim 19 or 20, wherein the act of providing the wireless device with access to the high capacity channel further comprises an act of connecting the wireless device at a docking station, the docking station having a communication link with the network device that provides the wireless device with access to the high capacity channel through the network device.

22. The method as defined in one of claims 19 to 21, further comprising an act of sending notifications over the low capacity channel when the wireless devices loses access to the high capacity channel.

23. The method as defined in claim 1, wherein the notification server sends a notification to the wireless device through a proxy server (222) over the low capacity channel, the method capable of routing the notification over the high capacity channel when the high capacity channel is available, the method further comprising:
an act of detecting that the wireless device has access to the high capacity channel;
an act of the proxy server receiving an access notification from the wireless device, wherein the access notification informs the proxy server that the wireless device has access to the high capacity channel;
an act of the proxy server routing the notification to the wireless device over the high capacity channel instead of the low capacity channel; and
an act of the proxy server resuming sending the notification to the wireless device over the low capacity channel when the wireless device no longer has access to the high capacity channel.

24. The method as defined in claim 23, wherein the act of the proxy server routing the notification further comprises an act of formatting the notification for transmission over the high capacity channel.

25. The method as defined in claim 23 or 24, wherein the act of detecting the high capacity channel further comprises an act of connecting the wireless device with the high capacity network over a communication link.

26. The method as defined in claim 25, wherein the communication link is provided by a network device, the communication link being one of: a serial link, a universal serial bus link, a wireless bluetooth link, and an infrared link.

27. The method as defined in one of claims 23 to 26, further comprising an act of the proxy server determining that the wireless device no longer has access to the high capacity channel.

28. The method as defined in claim 27, wherein the act of the proxy server determining that the wireless device no longer has access further comprises:
an act of implementing a timeout for the notification sent to the wireless device; and
an act of resuming sending the notification to the wireless device over the low capacity channel if an acknowledgement of the notification is not received by the proxy server before the timeout expires.

29. The method as defined in claim 1, wherein the system further includes a network device (232), and the method further comprises the steps of:
detecting the high capacity channel by the wireless device, wherein the wireless device has access to the high capacity channel through a network device;
notifying the notification server that the wireless device can receive notifications over the high capacity channel; and
sending notifications over the high capacity channel, wherein the network device forwards the notifications to the wireless device.

30. The method as defined in claim 29, further comprising:
an act of detecting that the wireless device no longer has access to the high capacity channel; and
an act of sending notifications over the low capacity channel when the high capacity channel is unavailable to the wireless device.

31. The method as defined in claim 29 or 30, further comprising:
an act of the wireless device sending an acknowledgement to the notification server for each notification received by the wireless device; and
an act of the notification server determining that the wireless device no longer has access to the high capacity channel if a particular acknowledgement for a particular notification is not received in a time period.

32. The method as defined in one of claims 29 to 31, further comprising:
an act of formatting the notification for transmission over the low capacity channel if the high capacity channel is unavailable; and
an act of formatting the notification for transmission over the high capacity channel when the wireless device has access to the high capacity channel.

33. The method as defined in one of claims 29 to 32, further comprising an act of docking the wireless device with the network device.

34. A computer readable medium having computer executable instructions for performing the methods of one of claims 1 to 33.

35. A computer program product comprising the computer readable medium of claim 34.

36. A wireless device in a system including the wireless device and a notification server, the wireless device being capable of receiving notifications from the notification server over a low capacity channel, the notifications being routed over a high capacity channel whenever the high capacity channel is available to the wireless device, the wireless device comprising:
means for detecting the high capacity channel;
means for notifying the notification server that the wireless device has access to the high capacity channel; and
means for receiving the notifications from the notification server over the high capacity channel.

37. The wireless device as defined in claim 36, wherein the means for detecting the high capacity channel further comprises means for connecting the wireless device with a network device, wherein the wireless device communicates with the network device over a communication link, wherein the means for connecting the wireless device is capable of connecting the wireless device automatically.

38. The wireless device as defined in claim 37, wherein the means for connecting the wireless device is adapted to connect the wireless device to a network device which is one of a desktop computer and a bluetooth enabled LAN.

39. The wireless device as defined in claim 37, wherein the communication link is one of a serial link, a universal serial bus link, a wireless bluetooth link and an infrared link.

40. The wireless device as defined in one of claims 36 to 39, wherein the means for detecting the high capacity channel further comprises means for communicating with a network device over a communication link.

41. The wireless device as defined in one of claims 36 to 40, wherein the means for notifying the notification server comprises means for sending an access notification to the notification server, wherein the access notification identifies that the high capacity channel is available for notifications sent to the wireless device.

42. The wireless device as defined in one of claims 36 to 41, wherein the means for notifying the notification server further comprises means for providing the notification server with a new address, wherein the notifications are routed to the new address.

43. The wireless device as defined in one of claims 36 to 42, further comprising means for detecting that the wireless device no longer has access to the high capacity channel.

44. The wireless device as defined in claim 43, wherein the means for detecting that the wireless device no longer has access to the high capacity channel further comprises means for sending an acknowledgement to the notification server for each notification received by the wireless device.

45. The wireless device as defined in claim 43 or 44, wherein the means for detecting that the wireless device no longer has access further comprises means for notifying the notification server over the low capacity channel that notifications can no longer be sent over the high capacity channel.

46. The wireless device as defined in claim 36, further comprising:
means for accessing the high capacity channel;
means for establishing communication over the high capacity channel between the wireless device and the notification server;
means for receiving notifications over the high capacity channel instead of the low capacity channel; and
means for, when access to the high capacity channel terminates, resuming receiving notifications over the low capacity channel.

47. The wireless device as defined in claim 46, wherein the means for accessing the high capacity channel further comprises:
means for connecting the wireless device with a network device, wherein the network device has an existing access to the high capacity channel; and
means for detecting the high capacity channel.

48. The wireless device as defined in claim 46 or 47, wherein the means for establishing communication over the high capacity channel further comprises:
means for notifying the notification server that the wireless device has access to the high capacity channel,
wherein the notification server is provided with an address such that the wireless device receives the notifications over the high capacity channel, and the notifications are formatted for transmission over the high capacity channel.

49. The wireless device as defined in one of claims 46 to 48, further comprising means for enabling the notification server to determine that the wireless device can no longer receive notifications over the high capacity channel.

50. The wireless device as defined in claim 49, wherein the means for enabling the notification server to determine that the wireless device can no longer receive notifications over the high capacity channel comprises:
means for sending an acknowledgement for each notification sent by the notification server,
wherein the wireless device is determined to no longer have access to the high capacity channel if the notification server does not receive a particular acknowledgement for a particular notification within a predetermined time period.

51. The wireless device as defined in one of claims 46 to 50, adapted to receive notifications which are formatted for transmission over the high capacity channel when the wireless device has access to the high capacity channel.

52. The wireless device as defined in one of claims 46 to 51, adapted to receive notifications which are formatted for transmission over the low capacity channel when the wireless device does not have access to the high capacity channel.

53. The wireless device as defined in claim 36, adapted to receive updates from the notification server over the low capacity channel through a proxy server (222), wherein the updates may also be received at the wireless device over the high capacity channel, the wireless device further comprising:
means for accessing the high capacity channel through a network device (232) when the wireless device is in communication with the network device,
wherein the proxy server is contacted over the high capacity channel to notify the proxy server that the wireless device has access to the high capacity channel, and the wireless device further comprises:
means for receiving notifications from the notification server over the high capacity channel until the wireless device no longer has access to the high capacity channel, wherein the notification are re-routed by the proxy server over the high capacity channel.

54. The wireless device as defined in claim 53, further comprising means for receiving notifications over the low capacity channel when the high capacity channel is not available to the wireless device.

55. The wireless device as defined in claim 53 or 54, wherein the means for accessing the high capacity channel further comprises means for connecting the wireless device at a docking station, the docking station having a communication link with the network device that provides the wireless device with access to the high capacity channel through the network device.

56. The wireless device as defined in one of claims 53 to 55 adapted to receive notifications over the low capacity channel when the wireless devices loses access to the high capacity channel.

57. The wireless device as defined in claim 36, wherein the notification server sends a notification to the wireless device through a proxy server (222) over the low capacity channel, the notification can be routed over the high capacity channel when the high capacity channel is available, the wireless device further comprising:
means for detecting that the wireless device has access to the high capacity channel, and
means for sending an access notification to the proxy server, wherein the access notification informs the proxy server that the wireless device has access to the high capacity channel;
wherein the proxy server routes the notification to the wireless device over the high capacity channel instead of the low capacity channel, and resumes sending the notification to the wireless device over the low capacity channel when the wireless device no longer has access to the high capacity channel.

58. The wireless device as defined in claim 57, adapted to receive notifications from the proxy server formatted for transmission over the high capacity channel.

59. The wireless device as defined in claim 57 or 58, wherein the means for detecting the high capacity channel further comprises means for connecting the wireless device with the high capacity network over a communication link.

60. The wireless device as defined in claim 59, wherein the communication link is provided by a network device, the communication link being one of: a serial link, a universal serial bus link, a wireless bluetooth link, and an infrared link.

61. The wireless device as defined in claim 36, wherein the system further includes a network device (232), and the wireless device further comprises:
means for detecting the high capacity channel, wherein the wireless device has access to the high capacity channel through a network device;
means for notifying the notification server that the wireless device can receive notifications over the high capacity channel; and
means for receiving notifications over the high capacity channel, wherein the network device forwards the notifications to the wireless device.

62. The wireless device as defined in claim 61, further comprising:
means for detecting that the wireless device no longer has access to the high capacity channel; and
means for receiving notifications over the low capacity channel when the high capacity channel is unavailable to the wireless device.

63. The wireless device as defined in claim 61 or 62, further comprising:
means for sending an acknowledgement to the notification server for each notification received by the wireless device,
wherein the notification server determines that the wireless device no longer has access to the high capacity channel if a particular acknowledgement for a particular notification is not received in a time period.

64. The wireless device as defined in one of claims 61 to 63, further comprising means for docking the wireless device with the network device.

65. A system comprising a wireless device (210) and a notification server (202), the wireless device being capable of receiving notifications from the notification server over a low capacity channel, the notifications being routed over a high capacity channel whenever the high capacity channel is available to the wireless device, the wireless device comprising means for detecting the high capacity channel, means for notifying the notification server that the wireless device has access to the high capacity channel, and means for receiving the notifications from the notification server over the high capacity channel.

66. The system as defined in claim 65, wherein the wireless device is further arranged according to one of claims 37 to 64.

## Patentansprüche

1. Verfahren zum Leiten von Benachrichtigungen in einem System, das eine Drahtlos-Vorrichtung (210) und einen Benachrichtigungs-Server (202) enthält, wobei der Benachrichtigungs-Server die Benachrichtigungen über einen Kanal (220) niedriger Kapazität zu der Drahtlos-Vorrichtung sendet und das Verfahren dazu dient, die Benachrichtigungen immer dann über einen Kanal (230) hoher Kapazität zu leiten, wenn der Kanal hoher Kapazität für die Drahtlos-Vorrichtung verfügbar ist, und das Verfahren den Schritt des Betreibens der Drahtlos-Vorrichtung umfasst, so dass sie durchführt:
einen Vorgang des Erfassens des Kanals hoher Kapazität;
einen Vorgang des Benachrichtigens des Benachrichtigungs-Servers darüber, dass die Drahtlos-Vorrichtung Zugriff auf den Kanal hoher Kapazität hat; und
einen Vorgang des Empfangens von Benachrichtigungen von dem Benachrichtigungs-Server über den Kanal hoher Kapazität.

2. Verfahren nach Anspruch 1, wobei der Vorgang des Erfassens des Kanals hoher Kapazität des Weiteren einen Vorgang des Verbindens der Drahtlos-Vorrichtung mit einer Netzwerk-Vorrichtung umfasst, wobei die Drahtlos-Vorrichtung mit der Netzwerk-Vorrichtung über eine Kommunikationsverbindung kommuniziert und der Vorgang des Verbindens der Drahtlos-Vorrichtung automatisch stattfinden kann.

3. Verfahren nach Anspruch 2, wobei die Netzwerk-Vorrichtung ein Desktop-Computer oder ein bluetooth-fähiges LAN ist.

4. Verfahren nach Anspruch 2, wobei die Kommunikationsverbindung eine serielle Verbindung, eine USB-Verbindung, eine Bluetooth-Drahtlos-Verbindung oder eine Infrarotverbindung ist.

5. Verfahren nach einem der Ansprüche 1 bis 4, wobei der Vorgang des Erfassens des Kanals hoher Kapazität des Weiteren einen Vorgang des Kommunizierens mit einer Netzwerk-Vorrichtung über eine Kommunikationsverbindung umfasst.

6. Verfahren nach einem der Ansprüche 1 bis 5, wobei der Vorgang des Benachrichtigens des Benachrichtigungs-Servers einen Vorgang des Sendens einer Zugangs-Benachrichtigung zu dem Benachrichtigungs-Server umfasst und die Zugangs-Benachrichtigung angibt, dass der Kanal hoher Kapazität für zu der Drahtlos-Vorrichtung gesendete Benachrichtigungen verfügbar ist.

7. Verfahren nach einem der Ansprüche 1 bis 6, wobei der Vorgang des Benachrichtigens des Benachrichtigungs-Servers des Weiteren einen Vorgang des Versehens des Benachrichtigungs-Servers mit einer neuen Adresse umfasst und die Benachrichtigungen zu der neuen Adresse geleitet werden.

8. Verfahren nach einem der Ansprüche 1 bis 7, das des Weiteren einen Vorgang umfasst, mit dem erfasst wird, dass die Drahtlos-Vorrichtung keinen Zugriff mehr auf den Kanal hoher Kapazität hat.

9. Verfahren nach Anspruch 8, wobei der Vorgang, mit dem erfasst wird, dass die Drahtlos-Vorrichtung keinen Zugriff mehr auf den Kanal hoher Kapazität hat, des Weiteren einen Vorgang des Sendens einer Quittung für jede durch die Drahtlos-Vorrichtung empfangene Benachrichtigung zu dem Benachrichtigungs-Server umfasst.

10. Verfahren nach Anspruch 8 oder 9, wobei der Vorgang, mit dem erfasst wird, dass die Drahtlos-Vorrichtung keinen Zugriff mehr hat, des Weiteren den Vorgang des Benachrichtigens des Benachrichtigungs-Servers über den Kanal niedriger Kapazität darüber umfasst, dass Benachrichtigungen nicht mehr über den Kanal hoher Kapazität gesendet werden können.

11. Verfahren nach Anspruch 1, das des Weiteren die folgenden Schritte umfasst:
Zugreifen auf den Kanal hoher Kapazität durch die Drahtlos-Vorrichtung;
Herstellen von Kommunikation zwischen der Drahtlos-Vorrichtung und dem Benachrichtigungs-Server über den Kanal hoher Kapazität;
Senden von Benachrichtigungen statt über den Kanal niedriger Kapazität über den Kanal hoher Kapazität; und
wenn Zugriff auf den Kanal hoher Kapazität endet, erneutes Senden von Benachrichtigungen über den Kanal niedriger Kapazität.

12. Verfahren nach Anspruch 11, wobei der Schritt des Zugreifens auf den Kanal hoher Kapazität des Weiteren umfasst:
einen Vorgang zum Verbinden der Drahtlos-Vorrichtung mit einer Netzwerk-Vorrichtung, wobei die Netzwerk-Vorrichtung über einen vorhandenen Zugriff auf den Kanal hoher Kapazität verfügt; und
einen Vorgang des Erfassens des Kanals hoher Kapazität durch die Drahtlos-Vorrichtung.

13. Verfahren nach Anspruch 11 oder 12, wobei der Vorgang des Herstellens von Kommunikation über den Kanal hoher Kapazität des Weiteren umfasst:
einen Vorgang des Benachrichtigens des Benachrichtigungs-Servers durch die Drahtlos-Vorrichtung darüber, dass die Drahtlos-Vorrichtung Zugriff auf den Kanal hoher Kapazität hat;
einen Vorgang des Versehens des Benachrichtigungs-Servers mit einer Adresse, so dass die Drahtlos-Vorrichtung die Benachrichtigungen über den Kanal hoher Kapazität empfängt; und
einen Vorgang des Formatierens der Benachrichtigungen zum Senden über den Kanal hoher Kapazität.

14. Verfahren nach einem der Ansprüche 11 bis 13, das des Weiteren einen Schritt umfasst, mit dem bestimmt wird, dass die Drahtlos-Vorrichtung keine Benachrichtigungen mehr über den Kanal hoher Kapazität empfangen kann.

15. Verfahren nach Anspruch 14, wobei der Schritt, mit dem bestimmt wird, dass die Drahtlos-Vorrichtung keine Benachrichtigungen mehr über den Kanal hoher Kapazität empfangen kann, umfasst:
einen Vorgang des Sendens einer Quittung durch die Drahtlos-Vorrichtung für jede durch den Benachrichtigungs-Server gesendete Benachrichtigung; und
einen Vorgang, mit dem bestimmt wird, dass die Drahtlos-Vorrichtung keinen Zugriff mehr auf den Kanal hoher Kapazität hat, wenn der Benachrichtigungs-Server innerhalb eines vorgegebenen Zeitraums keine spezielle Quittung für eine spezielle Benachrichtigung empfängt.

16. Verfahren nach einem der Ansprüche 11 bis 15, das des Weiteren einen Schritt zum Wiederaufnehmen des Schrittes zum Senden von Benachrichtigungen über den Kanal hoher Kapazität umfasst, wenn die Drahtlos-Vorrichtung wieder Zugriff auf den Kanal hoher Kapazität hat.

17. Verfahren nach einem der Ansprüche 11 bis 16, das des Weiteren einen Schritt zum Vorbereiten der Benachrichtigung zum Senden über den Kanal hoher Kapazität umfasst, wenn die Drahtlos-Vorrichtung Zugriff auf den Kanal hoher Kapazität hat.

18. Verfahren nach einem der Ansprüche 11 bis 17, das des Weiteren einen Schritt zum Vorbereiten der Benachrichtigung zum Senden über den Kanal niedriger Kapazität umfasst, wenn die Drahtlos-Vorrichtung keinen Zugriff auf den Kanal hoher Kapazität hat.

19. Verfahren nach Anspruch 1, wobei die Drahtlos-Vorrichtung Aktualisierungen von dem Benachrichtigungs-Server über den Kanal niedriger Kapazität über einen Proxy-Server (222) empfängt und die Updates auch über den Kanal hoher Kapazität an der Drahtlos-Vorrichtung empfangen werden können und das Verfahren des Weiteren umfasst:
einen Vorgang des Versehens der Drahtlos-Vorrichtung mit Zugriff auf den Kanal hoher Kapazität über eine Netzwerk-Vorrichtung (232), wenn die Drahtlos-Vorrichtung mit der Netzwerk-Vorrichtung kommuniziert;
einen Vorgang des Aufnehmens von Kontakt mit dem Proxy-Server über den Kanal hoher Kapazität, um den Proxy-Server darüber zu benachrichtigen, dass die Drahtlos-Vorrichtung Zugriff auf den Kanal hoher Kapazität hat; und
einen Vorgang des Empfangens von Benachrichtigungen von dem Benachrichtigungs-Server über den Kanal hoher Kapazität, bis die Drahtlos-Vorrichtung keinen Zugriff mehr auf den Kanal hoher Kapazität hat, wobei die Benachrichtigungen durch den Proxy-Server über den Kanal hoher Kapazität umgeleitet werden.

20. Verfahren nach Anspruch 19, das des Weiteren einen Vorgang des Empfangens von Benachrichtigungen über den Kanal niedriger Kapazität umfasst, wenn der Kanal hoher Kapazität für die Drahtlos-Vorrichtung nicht verfügbar ist.

21. Verfahren nach Anspruch 19, oder 20, wobei der Vorgang des Versehens der Drahtlos-Vorrichtung mit Zugriff auf den Kanal hoher Kapazität des Weiteren einen Vorgang des Verbindens der Drahtlos-Vorrichtung an einer Docking-Station umfasst und die Docking-Station eine Kommunikationsverbindung mit der Netzwerk-Vorrichtung hat, die die Drahtlos-Vorrichtung mit Zugriff auf den Kanal hoher Kapazität über die Netzwerk-Vorrichtung versieht.

22. Verfahren nach einem der Ansprüche 19 bis 21, das des Weiteren einen Vorgang des Sendens von Benachrichtigungen über den Kanal niedriger Kapazität umfasst, wenn die Drahtlos-Vorrichtung Zugriff auf den Kanal hoher Kapazität verliert.

23. Verfahren nach Anspruch 1, wobei der Benachrichtigungs-Server eine Benachrichtigung zu der Drahtlos-Vorrichtung über einen Proxy-Server (222) über den Kanal niedriger Kapazität sendet und das Verfahren in der Lage ist, die Benachrichtigung über den Kanal hoher Kapazität zu leiten, wenn der Kanal hoher Kapazität verfügbar ist, wobei das Verfahren des Weiteren umfasst:
einen Vorgang, mit dem erfasst wird, dass die Drahtlos-Vorrichtung Zugriff auf den Kanal hoher Kapazität hat;
einen Vorgang des Empfangens einer Zugriffs-Benachrichtigung von der Drahtlos-Vorrichtung durch den Proxy-Server, wobei die Zugriffs-Benachrichtigung den Proxy-Server darüber informiert, dass die Drahtlos-Vorrichtung Zugriff auf den Kanal hoher Kapazität hat;
einen Vorgang des Leitens der Benachrichtigung zu dem Drahtlos-Server über den Kanal hoher Kapazität statt über den Kanal niedriger Kapazität durch den Proxy-Server; und
einen Vorgang des Wiederaufnehmens von Senden der Benachrichtigung zu der Drahtlos-Vorrichtung über den Kanal niedriger Kapazität durch den Proxy-Server, wenn die Drahtlos-Vorrichtung keinen Zugriff mehr auf den Kanal hoher Kapazität hat.

24. Verfahren nach Anspruch 23, wobei der Vorgang des Leitens der Benachrichtigung durch den Proxy-Server des Weiteren einen Vorgang des Formatierens der Benachrichtigung zum Senden über den Kanal hoher Kapazität umfasst.

25. Verfahren nach Anspruch 23 oder 24, wobei der Vorgang des Erfassens des Kanals hoher Kapazität des Weiteren einen Vorgang des Verbindens der Drahtlos-Vorrichtung mit dem Netzwerk hoher Kapazität über eine Kommunikationsverbindung umfasst.

26. Verfahren nach Anspruch 25, wobei die Kommunikationsverbindung durch eine Netzwerk-Vorrichtung bereitgestellt wird und die Kommunikationsverbindung eine serielle Verbindung, eine USB-Verbindung, eine Bluetooth-Drahtlos-Verbindung oder eine Infrarotverbindung ist.

27. Verfahren nach einem der Ansprüche 23 bis 26, das des Weiteren einen Vorgang umfasst, mit dem der Proxy-Server bestimmt, dass die Drahtlos-Vorrichtung keinen Zugriff mehr auf den Kanal hoher Kapazität hat.

28. Verfahren nach Anspruch 27, wobei der Vorgang, mit dem der Proxy-Server bestimmt, dass die Drahtlos-Vorrichtung keinen Zugriff mehr hat, des Weiteren umfasst:
einen Vorgang des Implementierens eines Timeouts für die zu der Drahtlos-Vorrichtung gesendete Benachrichtigung; und
einen Vorgang des Wiederaufnehmens des Sendens der Benachrichtigung zu der Drahtlos-Vorrichtung über den Kanal niedriger Kapazität, wenn keine Quittung der Benachrichtigung durch den Proxy-Server empfangen wird, bevor der Timeout abläuft.

29. Verfahren nach Anspruch 1, wobei das System des Weiteren eine Netzwerk-Vorrichtung (232) enthält und das Verfahren des Weiteren die folgenden Schritte umfasst:
Erfassen des Kanals hoher Kapazität durch die Drahtlos-Vorrichtung, wobei die Drahtlos-Vorrichtung Zugriff auf den Kanal hoher Kapazität über eine Netzwerk-Vorrichtung hat;
Benachrichtigen des Benachrichtigungs-Servers darüber, dass die Drahtlos-Vorrichtung Benachrichtigungen über den Kanal hoher Kapazität empfangen kann; und
Senden von Benachrichtigungen über den Kanal hoher Kapazität, wobei die Netzwerk-Vorrichtung die Benachrichtigungen zu der Drahtlos-Vorrichtung weiterleitet.

30. Verfahren nach Anspruch 29, das des Weiteren umfasst:
einen Vorgang, mit dem erfasst wird, dass die Drahtlos-Vorrichtung keinen Zugriff mehr auf den Kanal hoher Kapazität hat; und
einen Vorgang des Sendens von Benachrichtigungen über den Kanal niedriger Kapazität, wenn der Kanal hoher Kapazität für die Drahtlos-Vorrichtung nicht verfügbar ist.

31. Verfahren nach Anspruch 29 oder 30, das des Weiteren umfasst:
einen Vorgang des Sendens einer Quittung zu dem Benachrichtigungs-Server für jede durch die Drahtlos-Vorrichtung empfangene Benachrichtigung durch die Drahtlos-Vorrichtung; und
einen Vorgang, mit dem der Benachrichtigungs-Server bestimmt, dass die Drahtlos-Vorrichtung keinen Zugriff mehr auf den Kanal hoher Kapazität hat, wenn in einem Zeitraum keine spezielle Quittung für eine spezielle Benachrichtigung empfangen wird.

32. Verfahren nach einem der Ansprüche 29 bis 31, das des Weiteren umfasst:
einen Vorgang des Formatierens der Benachrichtigung zum Senden über den Kanal niedriger Kapazität, wenn der Kanal hoher Kapazität nicht verfügbar ist; und
einen Vorgang des Formatierens der Benachrichtigung zum Senden über den Kanal hoher Kapazität, wenn die Drahtlos-Vorrichtung Zugriff auf den Kanal hoher Kapazität hat.

33. Verfahren nach einem der Ansprüche 29 bis 32, das des Weiteren einen Vorgang des Koppelns der Drahtlos-Vorrichtung mit der Netzwerk-Vorrichtung umfasst.

34. Computerlesbares Medium, das durch Computer ausführbare Befehle zum Durchführen der Verfahren nach einem der Ansprüche 1 bis 33 aufweist.

35. Computerprogrammerzeugnis, das das computerlesbare Medium nach Anspruch 34 umfasst.

36. Drahtlos-Vorrichtung in einem System, das die Drahtlos-Vorrichtung und einen Benachrichtigungs-Server enthält, wobei die Drahtlos-Vorrichtung in der Lage ist, Benachrichtigungen von dem Benachrichtigungs-Server über einen Kanal niedriger Kapazität zu empfangen, und die Benachrichtigungen immer dann über einen Kanal hoher Kapazität geleitet werden, wenn der Kanal hoher Kapazität für die Drahtlos-Vorrichtung verfügbar ist, und die Drahtlos-Vorrichtung umfasst:
eine Einrichtung zum Erfassen des Kanals hoher Kapazität;
eine Einrichtung, die den Benachrichtigungs-Server darüber benachrichtigt, dass die Drahtlos-Vorrichtung Zugriff auf den Kanal hoher Kapazität hat; und
eine Einrichtung zum Empfangen der Benachrichtigungen von dem Benachrichtigungs-Server über den Kanal hoher Kapazität.

37. Drahtlos-Vorrichtung nach Anspruch 36, wobei die Einrichtung zum Erfassen des Kanals hoher Kapazität des Weiteren eine Einrichtung zum Verbinden der Drahtlos-Vorrichtung mit einer Netzwerk-Vorrichtung umfasst, die Drahtlos-Vorrichtung mit der Netzwerk-Vorrichtung über eine Kommunikationsverbindung kommuniziert und die Einrichtung zum Verbinden der Drahtlos-Vorrichtung in der Lage ist, die Drahtlos-Vorrichtung automatisch zu verbinden.

38. Drahtlos-Vorrichtung nach Anspruch 37, wobei die Einrichtung zum Verbinden der Drahtlos-Vorrichtung so eingerichtet ist, dass sie die Drahtlos-Vorrichtung mit einer Netzwerk-Vorrichtung verbindet, die ein Desktop-Computer oder ein bluetooth-fähiges LAN ist.

39. Drahtlos-Vorrichtung nach Anspruch 37, wobei die Kommunikationsverbindung eine serielle Verbindung, eine USB-Verbindung, eine Bluetooth-Drahtlos-Verbindung oder eine Infrarotverbindung ist.

40. Drahtlos-Vorrichtung nach einem der Ansprüche 36 bis 39, wobei die Einrichtung zum Erfassen des Kanals hoher Kapazität des Weiteren eine Einrichtung zum Kommunizieren mit einer Netzwerk-Vorrichtung über eine Kommunikationsverbindung umfasst.

41. Drahtlos-Vorrichtung nach einem der Ansprüche 36 bis 40, wobei die Einrichtung zum Benachrichtigen des Benachrichtigungs-Servers eine Einrichtung zum Senden einer Zugriffs-Benachrichtigung zu dem Benachrichtigungs-Server umfasst und die Zugriffs-Benachrichtigung angibt, dass der Kanal hoher Kapazität für zu der Drahtlos-Vorrichtung gesendete Benachrichtigungen verfügbar ist.

42. Drahtlos-Vorrichtung nach einem der Ansprüche 36 bis 41, wobei die Einrichtung zum Benachrichtigen des Benachrichtigungs-Servers des Weiteren eine Einrichtung umfasst, die den Benachrichtigungs-Server mit einer neuen Adresse versieht, und die Benachrichtigungen zu der neuen Adresse geleitet werden.

43. Drahtlos-Vorrichtung nach einem der Ansprüche 36 bis 42, die des Weiteren eine Einrichtung umfasst, die erfasst, dass die Drahtlos-Vorrichtung keinen Zugriff auf den Kanal hoher Kapazität mehr hat.

44. Drahtlos-Vorrichtung nach Anspruch 43, wobei die Einrichtung, die erfasst, dass die Drahtlos-Vorrichtung keinen Zugriff mehr auf den Kanal hoher Kapazität hat, des Weiteren eine Einrichtung umfasst, die für jede durch die Drahtlos-Vorrichtung empfangene Benachrichtigung eine Quittung zu dem Benachrichtigungs-Server sendet.

45. Drahtlos-Vorrichtung nach Anspruch 43 oder 44, wobei die Einrichtung, die erfasst, dass die Drahtlos-Vorrichtung keinen Zugriff mehr hat, des Weiteren eine Einrichtung umfasst, die den Benachrichtigungs-Server über den Kanal niedriger Kapazität benachrichtigt, dass Benachrichtigungen nicht mehr über den Kanal hoher Kapazität gesendet werden können.

46. Drahtlos-Vorrichtung nach Anspruch 36, die des Weiteren umfasst:
eine Einrichtung zum Zugreifen auf den Kanal hoher Kapazität;
eine Einrichtung zum Herstellen von Kommunikation zwischen der Drahtlos-Vorrichtung und dem Benachrichtigungs-Server über den Kanal hoher Kapazität;
eine Einrichtung zum Empfangen von Benachrichtigungen über den Kanal hoher Kapazität statt über den Kanal niedriger Kapazität; und
eine Einrichtung, die, wenn Zugriff auf den Kanal hoher Kapazität endet, Empfangen von Benachrichtigungen über den Kanal niedriger Kapazität wieder aufnimmt.

47. Drahtlos-Vorrichtung nach Anspruch 46, wobei die Einrichtung zum Zugreifen auf den Kanal hoher Kapazität des Weiteren umfasst:
eine Einrichtung zum Verbinden der Drahtlos-Vorrichtung mit einer Netzwerk-Vorrichtung, wobei die Netzwerk-Vorrichtung über einen vorhandenen Zugriff auf den Kanal hoher Kapazität verfügt; und
eine Einrichtung zum Erfassen des Kanals hoher Kapazität.

48. Drahtlos-Vorrichtung nach Anspruch 46 oder 47, wobei die Einrichtung zum Herstellen von Kommunikation über den Kanal hoher Kapazität des Weiteren umfasst:
eine Einrichtung, die den Benachrichtigungs-Server benachrichtigt, dass die Drahtlos-Vorrichtung Zugriff auf den Kanal hoher Kapazität hat,
wobei der Benachrichtigungs-Server mit einer Adresse versehen ist, so dass die Drahtlos-Vorrichtung die Benachrichtigungen über den Kanal hoher Kapazität empfängt, und die Benachrichtigungen zum Senden über den Kanal hoher Kapazität formatiert werden.

49. Drahtlos-Vorrichtung nach einem der Ansprüche 46 bis 48, die des Weiteren eine Einrichtung umfasst, die den Benachrichtigungs-Server befähigt, zu bestimmen, dass die Drahtlos-Vorrichtungen Benachrichtigungen nicht mehr über den Kanal hoher Kapazität empfangen kann.

50. Drahtlos-Vorrichtung nach Anspruch 49, wobei die Einrichtung, die den Benachrichtigungs-Server befähigt, zu bestimmen, dass die Drahtlos-Vorrichtung Benachrichtigungen nicht mehr über den Kanal hoher Kapazität empfangen kann, umfasst:
eine Einrichtung, die für jede durch den Benachrichtigungs-Server gesendete Benachrichtigung eine Quittung sendet,
wobei bestimmt wird, dass die Drahtlos-Vorrichtung keinen Zugriff mehr auf den Kanal hoher Kapazität hat, wenn der Benachrichtigungs-Server keine spezielle Quittung für eine spezielle Benachrichtigung innerhalb eines vorgegebenen Zeitraums empfängt.

51. Drahtlos-Vorrichtung nach einem der Ansprüche 46 bis 50, die so eingerichtet ist, dass sie Benachrichtigungen empfängt, die zum Senden über den Kanal hoher Kapazität formatiert sind, wenn die Drahtlos-Vorrichtung Zugriff auf den Kanal hoher Kapazität hat.

52. Drahtlos-Vorrichtung nach einem der Ansprüche 46 bis 51, die so eingerichtet ist, dass sie Benachrichtigungen empfängt, die zum Senden über den Kanal niedriger Kapazität formatiert sind, wenn die Drahtlos-Vorrichtung keinen Zugriff auf den Kanal hoher Kapazität hat.

53. Drahtlos-Vorrichtung nach Anspruch 36, die so eingerichtet ist, dass sie Aktualisierungen von dem Benachrichtigungs-Server über den Kanal niedriger Kapazität über einen Proxy-Server (222) empfängt, wobei die Aktualisierungen auch über den Kanal hoher Kapazität an der Drahtlos-Vorrichtung empfangen werden können und die Drahtlos-Vorrichtung des Weiteren umfasst:
eine Einrichtung, die auf den Kanal hoher Kapazität über eine Netzwerk-Vorrichtung (232) zugreift, wenn die Drahtlos-Vorrichtung mit der Netzwerk-Vorrichtung kommuniziert,
wobei Kontakt mit dem Proxy-Server über den Kanal hoher Kapazität hergestellt wird, um den Proxy-Server darüber zu benachrichtigen, dass die Drahtlos-Vorrichtung Zugriff auf den Kanal hoher Kapazität hat, und die Drahtlos-Vorrichtung des Weiteren umfasst:
eine Einrichtung, die Benachrichtigungen von dem Benachrichtigungs-Server über den Kanal hoher Kapazität empfängt, bis die Drahtlos-Vorrichtung keinen Zugriff mehr auf den Kanal hoher Kapazität hat, wobei die Benachrichtigungen durch den Proxy-Server über den Kanal hoher Kapazität umgeleitet werden.

54. Drahtlos-Vorrichtung nach Anspruch 53, die des Weiteren eine Einrichtung umfasst, die Benachrichtigungen über den Kanal niedriger Kapazität empfängt, wenn der Kanal hoher Kapazität für die Drahtlos-Vorrichtung nicht verfügbar ist.

55. Drahtlos-Vorrichtung nach Anspruch 53 oder 54, wobei die Einrichtung zum Zugreifen auf den Kanal hoher Kapazität des Weiteren eine Einrichtung zum Verbinden der Drahtlos-Vorrichtung an einer Docking-Station umfasst und die Docking-Station eine Kommunikationsverbindung mit der Netzwerk-Vorrichtung aufweist, die die Drahtlos-Vorrichtung mit Zugriff auf den Kanal hoher Kapazität über die Netzwerk-Vorrichtung versieht.

56. Drahtlos-Vorrichtung nach einem der Ansprüche 53 bis 55, die so eingerichtet ist, dass sie Benachrichtigungen über den Kanal niedriger Kapazität empfängt, wenn die Drahtlos-Vorrichtung Zugriff auf den Kanal hoher Kapazität verliert.

57. Drahtlos-Vorrichtung nach Anspruch 36, wobei der Benachrichtigungs-Server eine Benachrichtigung zu der Drahtlos-Vorrichtung über einen Proxy-Server (222) über den Kanal niedriger Kapazität sendet und die Benachrichtigung über den Kanal hoher Kapazität geleitet werden kann, wenn der Kanal hoher Kapazität verfügbar ist, und die Drahtlos-Vorrichtung des Weiteren umfasst:
eine Einrichtung, die erfasst, dass die Drahtlos-Vorrichtung Zugriff auf den Kanal hoher Kapazität hat, und
eine Einrichtung zum Senden einer Zugriffs-Benachrichtigung zu dem Proxy-Server, wobei die Zugriffs-Benachrichtigung den Proxy-Server darüber informiert, dass die Drahtlos-Vorrichtung Zugriff auf den Kanal hoher Kapazität hat;
wobei der Proxy-Server die Benachrichtigung zu der Drahtlos-Vorrichtung über den Kanal hoher Kapazität statt über den Kanal niedriger Kapazität leitet und Senden der Benachrichtigung zu der Drahtlos-Vorrichtung über den Kanal niedriger Kapazität wieder aufnimmt, wenn die Drahtlos-Vorrichtung keinen Zugriff mehr auf den Kanal hoher Kapazität hat.

58. Drahtlos-Vorrichtung nach Anspruch 57, die so eingerichtet ist, dass sie Benachrichtigungen von dem Proxy-Server empfängt, die zum Senden über den Kanal hoher Kapazität formatiert sind.

59. Drahtlos-Vorrichtung nach Anspruch 57 oder 58, wobei die Einrichtung zum Erfassen des Kanals hoher Kapazität des Weiteren eine Einrichtung zum Verbinden der Drahtlos-Vorrichtung mit dem Netzwerk hoher Kapazität über eine Kommunikationsverbindung umfasst.

60. Drahtlos-Vorrichtung nach Anspruch 59, wobei die Kommunikationsverbindung durch eine Netzwerk-Vorrichtung bereitgestellt wird und die Kommunikationsverbindung eine serielle Verbindung, eine USB-Verbindung, eine Bluetooth-Drahtlos-Verbindung oder eine Infrarotverbindung ist.

61. Drahtlos-Vorrichtung nach Anspruch 36, wobei das System des Weiteren eine Netzwerk-Vorrichtung (232) enthält und die Drahtlos-Vorrichtung des Weiteren umfasst:
eine Einrichtung zum Erfassen des Kanals hoher Kapazität, wobei die Drahtlos-Vorrichtung Zugriff auf den Kanal hoher Kapazität über eine Netzwerk-Vorrichtung hat;
eine Einrichtung, die den Benachrichtigungs-Server darüber benachrichtigt, dass die Drahtlos-Vorrichtung Benachrichtigungen über den Kanal hoher Kapazität empfangen kann; und
eine Einrichtung, die Benachrichtigungen über den Kanal hoher Kapazität empfängt, wobei die Netzwerk-Vorrichtung die Benachrichtigungen zu der Drahtlos-Vorrichtung weiterleitet.

62. Drahtlos-Vorrichtung nach Anspruch 61, die des Weiteren umfasst:
eine Einrichtung, die erfasst, dass die Drahtlos-Vorrichtungen keinen Zugriff auf den Kanal hoher Kapazität mehr hat; und
eine Einrichtung, die Benachrichtigungen über den Kanal niedriger Kapazität empfängt, wenn der Kanal hoher Kapazität für die Drahtlos-Vorrichtung nicht verfügbar ist.

63. Drahtlos-Vorrichtung nach Anspruch 61 oder 62, die des Weiteren umfasst:
eine Einrichtung, die für jede durch die Drahtlos-Vorrichtung empfangene Benachrichtigung eine Quittung zu dem Benachrichtigungs-Server sendet,
wobei der Benachrichtigungs-Server bestimmt, dass die Drahtlos-Vorrichtung keinen Zugriff mehr auf den Kanal hoher Kapazität hat, wenn in einem Zeitraum keine spezielle Quittung für eine spezielle Benachrichtigung empfangen wird.

64. Drahtlos-Vorrichtung nach einem der Ansprüche 61 bis 63, die des Weiteren eine Einrichtung zum Koppeln der Drahtlos-Verbindung mit der Netzwerk-Vorrichtung umfasst.

65. System, das eine Drahtlos-Vorrichtung (210) und einen Benachrichtigungs-Server (202) umfasst, wobei die Drahtlos-Vorrichtung in der Lage ist, Benachrichtigungen von dem Benachrichtigungs-Server über einen Kanal niedriger Kapazität zu empfangen, die Benachrichtigungen immer dann über einen Kanal hoher Kapazität geleitet werden, wenn der Kanal hoher Kapazität für die Drahtlos-Vorrichtung verfügbar ist, und die Drahtlos-Vorrichtung eine Einrichtung zum Erfassen des Kanals hoher Kapazität, eine Einrichtung, die den Benachrichtigungs-Server darüber benachrichtigt, dass die Drahtlos-Vorrichtung Zugriff auf den Kanal hoher Kapazität hat, sowie eine Einrichtung zum Empfangen der Benachrichtigungen von dem Benachrichtigungs-Server über den Kanal hoher Kapazität umfasst.

66. System nach Anspruch 65, wobei die Drahtlos-Vorrichtung des Weiteren nach einem der Ansprüche 37 bis 64 eingerichtet ist.

## Revendications

1. Procédé d'acheminement de notifications dans un système comprenant un dispositif sans fil (210) et un serveur de notifications (202), serveur de notifications qui envoie les notifications au dispositif sans fil par l'intermédiaire d'un canal à faible capacité (220), le procédé étant destiné à acheminer les notifications par l'intermédiaire d'un canal à haute capacité (230) à chaque fois que le canal à haute capacité est accessible au dispositif sans fil, le procédé comprenant l'étape qui consiste à activer le dispositif sans fil dans le but d'exécuter:
une étape de détection du canal à haute capacité;
une étape d'avertissement du serveur de notifications que le dispositif sans fil a accès au canal à haute capacité; et
une étape de réception des notifications du serveur de notifications par l'intermédiaire du canal à haute capacité.

2. Procédé tel que défini dans la revendication 1, dans lequel l'étape de détection du canal à haute capacité comprend également une étape de connexion du dispositif sans fil à un dispositif de réseau, le dispositif sans fil communiquant avec le dispositif de réseau par l'intermédiaire d'une liaison de communication, et l'étape de connexion du dispositif sans fil pouvant avoir lieu automatiquement.

3. Procédé tel que défini dans la revendication 2, dans lequel le dispositif de réseau est un ordinateur de bureau ou un réseau local (LAN) compatible avec la technologie Bluetooth.

4. Procédé tel que défini dans la revendication 2, dans lequel la liaison de communication est une liaison série, une liaison par bus série universel, une liaison Bluetooth sans fil ou une liaison infrarouge.

5. Procédé tel que défini dans l'une quelconque des revendications 1 à 4, dans lequel l'étape de détection du canal à haute capacité comprend également une étape de communication avec un dispositif de réseau par l'intermédiaire d'une liaison de communication.

6. Procédé tel que défini dans l'une quelconque des revendications 1 à 5, dans lequel l'étape d'avertissement du serveur de notifications comprend une étape d'envoi d'un avertissement d'accès au serveur de notifications, l'avertissement d'accès signalant que le canal à haute capacité est disponible pour l'envoi de notifications au dispositif sans fil.

7. Procédé tel que défini dans l'une quelconque des revendications 1 à 6, dans lequel l'étape d'avertissement du serveur de notifications comprend également une étape de fourniture au serveur de notifications d'une nouvelle adresse, nouvelle adresse à laquelle les notifications sont acheminées.

8. Procédé tel que défini dans l'une quelconque des revendications 1 à 7, comprenant également une étape de détection que le dispositif sans fil n'a plus accès au canal à haute capacité.

9. Procédé tel que défini dans la revendication 8, dans lequel l'étape de détection que le dispositif sans fil n'a plus accès au canal à haute capacité comprend également une étape d'envoi d'un accusé de réception au serveur de notifications pour chaque notification reçue par le dispositif sans fil.

10. Procédé tel que défini dans la revendication 8 ou 9, dans lequel l'étape de détection que le dispositif sans fil n'a plus accès comprend également l'étape d'avertissement du serveur de notifications par l'intermédiaire du canal à faible capacité que des notifications ne peuvent plus être envoyées par l'intermédiaire du canal à haute capacité.

11. Procédé tel que défini dans la revendication 1, comprenant également les étapes:
d'accès au canal à haute capacité par le dispositif sans fil;
d'établissement d'une communication par l'intermédiaire du canal à haute capacité entre le dispositif sans fil et le serveur de notifications;
d'envoi de notifications par l'intermédiaire du canal à haute capacité au lieu du canal à faible capacité; et
lorsqu'un accès au canal à haute capacité prend fin, de reprise de l'envoi de notifications par l'intermédiaire du canal à faible capacité.

12. Procédé tel que défini dans la revendication 11, dans lequel l'étape d'accès au canal à haute capacité comprend également:
une étape de connexion du dispositif sans fil à un dispositif de réseau, le dispositif de réseau ayant un accès existant au canal à haute capacité; et
une étape de détection du canal à haute capacité par le dispositif sans fil.

13. Procédé tel que défini dans la revendication 11 ou 12, dans lequel l'étape d'établissement d'une communication par l'intermédiaire du canal à haute capacité comprend également:
une étape d'avertissement du serveur de notifications par le dispositif sans fil que le dispositif sans fil a accès au canal à haute capacité;
une étape de fourniture au serveur de notifications d'une adresse afin que le dispositif sans fil reçoive les notifications par l'intermédiaire du canal à haute capacité; et
une étape de formatage des notifications en vue de leur transmission par l'intermédiaire du canal à haute capacité.

14. Procédé tel que défini dans l'une quelconque des revendications 11 à 13, comprenant également une étape pour déterminer que le dispositif sans fil ne peut plus recevoir de notifications par l'intermédiaire du canal à haute capacité.

15. Procédé tel que défini dans la revendication 14, dans lequel l'étape pour déterminer que le dispositif sans fil ne peut plus recevoir de notifications par l'intermédiaire du canal à haute capacité comprend:
une étape d'envoi d'un accusé de réception par le dispositif sans fil pour chaque notification envoyée par le serveur de notifications; et
une étape de détermination que le dispositif sans fil n'a plus accès au canal à haute capacité si le serveur de notifications ne reçoit pas un accusé de réception particulier pour une notification particulière dans les limites d'une période de temps prédéterminée.

16. Procédé tel que défini dans l'une quelconque des revendications 11 à 15, comprenant également une étape pour reprendre l'étape d'envoi de notifications par l'intermédiaire du canal à haute capacité lorsque le dispositif sans fil a à nouveau accès au canal à haute capacité.

17. Procédé tel que défini dans l'une quelconque des revendications 11 à 16, comprenant également une étape pour préparer la notification en vue de sa transmission par l'intermédiaire du canal à haute capacité lorsque le dispositif sans fil a accès au canal à haute capacité.

18. Procédé tel que défini dans l'une quelconque des revendications 11 à 17, comprenant également une étape pour préparer la notification en vue de sa transmission par l'intermédiaire du canal à faible capacité lorsque le dispositif sans fil n'a pas accès au canal à haute capacité.

19. Procédé tel que défini dans la revendication 1, dans lequel le dispositif sans fil reçoit des mises à jour du serveur de notifications par l'intermédiaire du canal à faible capacité grâce à un serveur mandataire (222), mises à jour qui peuvent également être reçues au niveau du dispositif sans fil par l'intermédiaire du canal à haute capacité, le procédé comprenant également:
une étape de fourniture au dispositif sans fil d'un accès au canal à haute capacité grâce à un dispositif de réseau (232) lorsque le dispositif sans fil est en communication avec le dispositif de réseau;
une étape d'entrée en contact avec le serveur mandataire par l'intermédiaire du canal à haute capacité pour avertir le serveur mandataire que le dispositif sans fil a accès au canal à haute capacité; et
une étape de réception de notifications du serveur de notifications par l'intermédiaire du canal à haute capacité jusqu'à ce que le dispositif sans fil n'ait plus accès au canal à haute capacité, les notifications étant réacheminées par le serveur mandataire par l'intermédiaire du canal à haute capacité.

20. Procédé tel que défini dans la revendication 19, comprenant également une étape de réception de notifications par l'intermédiaire du canal à faible capacité lorsque le canal à haute capacité n'est pas accessible au dispositif sans fil.

21. Procédé tel que défini dans la revendication 19 ou 20, dans lequel l'étape de fourniture au dispositif sans fil d'un accès au canal à haute capacité comprend également une étape de connexion du dispositif sans fil au niveau d'une station d'accueil, la station d'accueil comportant une liaison de communication avec le dispositif de réseau, qui assure au dispositif sans fil un accès au canal à haute capacité grâce au dispositif de réseau.

22. Procédé tel que défini dans l'une quelconque des revendications 19 à 21, comprenant également une étape d'envoi de notifications par l'intermédiaire du canal à faible capacité lorsque le dispositif sans fil perd l'accès au canal à haute capacité.

23. Procédé tel que défini dans la revendication 1, dans lequel le serveur de notifications envoie une notification au dispositif sans fil grâce à un serveur mandataire (222) par l'intermédiaire du canal à faible capacité, le procédé permettant d'acheminer la notification par l'intermédiaire du canal à haute capacité lorsque celui-ci est accessible, et comprenant en outre:
une étape de détection que le dispositif sans fil a accès au canal à haute capacité;
une étape de réception par le serveur mandataire d'un avertissement d'accès de la part du dispositif sans fil, avertissement d'accès qui informe le serveur mandataire que le dispositif sans fil a accès au canal à haute capacité;
une étape d'acheminement par le serveur mandataire de la notification au dispositif sans fil par l'intermédiaire du canal à haute capacité au lieu du canal à faible capacité; et
une étape de reprise par le serveur mandataire de l'envoi de la notification au dispositif sans fil par l'intermédiaire du canal à faible capacité lorsque le dispositif sans fil n'a plus accès au canal à haute capacité.

24. Procédé tel que défini dans la revendication 23, dans lequel l'étape d'acheminement de la notification par le serveur mandataire comprend également une étape de formatage de la notification en vue de sa transmission par l'intermédiaire du canal à haute capacité.

25. Procédé tel que défini dans la revendication 23 ou 24, dans lequel l'étape de détection du canal à haute capacité comprend également une étape de connexion du dispositif sans fil au réseau à haute capacité par l'intermédiaire d'une liaison de communication.

26. Procédé tel que défini dans la revendication 25, dans lequel la liaison de communication est fournie par le dispositif de réseau, la liaison de communication étant une liaison série, une liaison par bus série universel, une liaison Bluetooth sans fil ou une liaison infrarouge.

27. Procédé tel que défini dans l'une quelconque des revendications 23 à 26, comprenant également une étape de détermination par le serveur mandataire que le dispositif sans fil n'a plus accès au canal à haute capacité.

28. Procédé tel que défini dans la revendication 27, dans lequel l'étape de détermination par le serveur mandataire que le dispositif sans fil n'a plus accès comprend également:
une étape de mise en oeuvre d'un délai pour l'envoi de la notification au dispositif sans fil; et
une étape de reprise de l'envoi de la notification au dispositif sans fil par l'intermédiaire du canal à faible capacité si un accusé de réception de la notification n'est pas reçu par le serveur mandataire avant l'expiration du délai.

29. Procédé tel que défini dans la revendication 1, dans lequel le système comprend également un dispositif de réseau (232), le procédé comprenant en outre les étapes:
de détection du canal à haute capacité par le dispositif sans fil, le dispositif sans fil ayant accès au canal à haute capacité par l'intermédiaire d'un dispositif de réseau;
d'avertissement du serveur de notifications que le dispositif sans fil peut recevoir des notifications par l'intermédiaire du canal à haute capacité; et
d'envoi de notifications par l'intermédiaire du canal à haute capacité, le dispositif de réseau transmettant les notifications au dispositif sans fil.

30. Procédé tel que défini dans la revendication 29, comprenant également:
une étape de détection que le dispositif sans fil n'a plus accès au canal à haute capacité; et
une étape d'envoi de notifications par l'intermédiaire du canal à faible capacité lorsque le canal à haute capacité est inaccessible au dispositif sans fil.

31. Procédé tel que défini dans la revendication 29 ou 30, comprenant également:
une étape d'envoi par le dispositif sans fil d'un accusé de réception au serveur de notifications pour chaque notification reçue par le dispositif sans fil; et
une étape de détermination par le serveur de notifications que le dispositif sans fil n'a plus accès au canal à haute capacité si un accusé de réception particulier pour une notification particulière n'a pas été reçu pendant une période de temps.

32. Procédé tel que défini dans l'une quelconque des revendications 29 à 31, comprenant également:
une étape de formatage de la notification en vue de sa transmission par l'intermédiaire du canal à faible capacité si le canal à haute capacité n'est pas accessible; et
une étape de formatage de la notification en vue de sa transmission par l'intermédiaire du canal à haute capacité lorsque le dispositif sans fil a accès au canal à haute capacité.

33. Procédé tel que défini dans l'une quelconque des revendications 29 à 32, comprenant également une étape de connexion du dispositif sans fil par sa station d'accueil au dispositif de réseau.

34. Support lisible par ordinateur comportant des instructions lisibles par ordinateur pour mettre en oeuvre les procédés selon l'une quelconque des revendications 1 à 33.

35. Progiciel d'ordinateur comprenant le support lisible par ordinateur de la revendication 34.

36. Dispositif sans fil dans un système comprenant le dispositif sans fil et un serveur de notifications, le dispositif sans fil étant apte à recevoir des notifications du serveur de notifications par l'intermédiaire d'un canal à faible capacité, notifications qui sont acheminées par l'intermédiaire d'un canal à haute capacité à chaque fois que le canal à haute capacité est accessible au dispositif sans fil, le dispositif sans fil comprenant:
des moyens pour détecter le canal à haute capacité;
des moyens pour avertir le serveur de notifications que le dispositif sans fil a accès au canal à haute capacité; et
des moyens pour recevoir les notifications du serveur de notifications par l'intermédiaire du canal à haute capacité.

37. Dispositif sans fil tel que défini dans la revendication 36, dans lequel les moyens pour détecter le canal à haute capacité comprennent également des moyens pour connecter le dispositif sans fil à un dispositif de réseau, le dispositif sans fil communiquant avec le dispositif de réseau par l'intermédiaire d'une liaison de communication, et les moyens pour connecter le dispositif sans fil étant aptes à connecter le dispositif sans fil automatiquement.

38. Dispositif sans fil tel que défini dans la revendication 37, dans lequel les moyens pour connecter le dispositif sans fil sont adaptés pour connecter le dispositif sans fil à un dispositif de réseau qui est un ordinateur de bureau ou un réseau local (LAN) compatible avec la technologie Bluetooth.

39. Dispositif sans fil tel que défini dans la revendication 37, dans lequel la liaison de communication est une liaison série, une liaison par bus série universel, une liaison Bluetooth sans fil ou une liaison infrarouge.

40. Dispositif sans fil tel que défini dans l'une quelconque des revendications 36 à 39, dans lequel les moyens pour détecter le canal à haute capacité comprennent également des moyens pour communiquer avec un dispositif de réseau par l'intermédiaire d'une liaison de communication.

41. Dispositif sans fil tel que défini dans l'une quelconque des revendications 36 à 40, dans lequel les moyens pour avertir le serveur de notifications comprennent des moyens pour envoyer un avertissement d'accès au serveur de notifications, l'avertissement d'accès signalant que le canal à haute capacité est disponible pour l'envoi de notifications au dispositif sans fil.

42. Dispositif sans fil tel que défini dans l'une quelconque des revendications 36 à 41, dans lequel les moyens pour avertir le serveur de notifications comprennent également des moyens pour fournir au serveur de notifications une nouvelle adresse, nouvelle adresse à laquelle les notifications sont acheminées.

43. Dispositif sans fil tel que défini dans l'une quelconque des revendications 36 à 42, comprenant également des moyens pour détecter que le dispositif sans fil n'a plus accès au canal à haute capacité.

44. Dispositif sans fil tel que défini dans la revendication 43, dans lequel les moyens pour détecter que le dispositif sans fil n'a plus accès au canal à haute capacité comprennent également des moyens pour envoyer un accusé de réception au serveur de notifications pour chaque notification reçue par le dispositif sans fil.

45. Dispositif sans fil tel que défini dans la revendication 43 ou 44, dans lequel les moyens pour détecter que le dispositif sans fil n'a plus accès comprennent également des moyens pour avertir le serveur de notifications par l'intermédiaire du canal à faible capacité que des notifications ne peuvent plus être envoyées par l'intermédiaire du canal à haute capacité.

46. Dispositif sans fil tel que défini dans la revendication 36, comprenant également:
des moyens pour accéder au canal à haute capacité;
des moyens pour établir une communication par l'intermédiaire du canal à haute capacité entre le dispositif sans fil et le serveur de notifications;
des moyens pour recevoir des notifications par l'intermédiaire du canal à haute capacité au lieu du canal à faible capacité; et
des moyens pour, lorsqu'un accès au canal à haute capacité prend fin, reprendre la réception de notifications par l'intermédiaire du canal à faible capacité.

47. Dispositif sans fil tel que défini dans la revendication 46, dans lequel les moyens pour accéder au canal à haute capacité comprennent également:
des moyens pour connecter le dispositif sans fil à un dispositif de réseau, le dispositif de réseau ayant un accès existant au canal à haute capacité; et
des moyens pour détecter le canal à haute capacité.

48. Dispositif sans fil tel que défini dans la revendication 46 ou 47, dans lequel les moyens pour établir une communication par l'intermédiaire du canal à haute capacité comprennent également:
des moyens pour avertir le serveur de notifications que le dispositif sans fil a accès au canal à haute capacité,
le serveur de notifications étant muni d'une adresse afin que le dispositif sans fil reçoive les notifications par l'intermédiaire du canal à haute capacité, et les notifications étant formatées en vue de leur transmission par l'intermédiaire du canal à haute capacité.

49. Dispositif sans fil tel que défini dans l'une quelconque des revendications 46 à 48, comprenant également des moyens pour permettre au serveur de notifications de déterminer que le dispositif sans fil ne peut plus recevoir de notifications par l'intermédiaire du canal à haute capacité.

50. Dispositif sans fil tel que défini dans la revendication 49, dans lequel les moyens pour permettre au serveur de notifications de déterminer que le dispositif sans fil ne peut plus recevoir de notifications par l'intermédiaire du canal à haute capacité comprennent:
des moyens pour envoyer un accusé de réception pour chaque notification envoyée par le serveur de notifications,
le dispositif sans fil étant considéré ne plus avoir accès au canal à haute capacité si le serveur de notifications ne reçoit pas un accusé de réception particulier pour une notification particulière dans les limites d'une période de temps prédéterminée.

51. Dispositif sans fil tel que défini dans l'une quelconque des revendications 46 à 50, adapté pour recevoir des notifications formatées pour être transmises par l'intermédiaire du canal à haute capacité lorsque le dispositif sans fil a accès au canal à haute capacité.

52. Dispositif tel que défini dans l'une quelconque des revendications 46 à 51, adapté pour recevoir des notifications formatées pour être transmises par l'intermédiaire du canal à faible capacité lorsque le dispositif sans fil n'a pas accès au canal à haute capacité.

53. Dispositif sans fil tel que défini dans la revendication 36, adapté pour recevoir des mises à jour du serveur de notifications par l'intermédiaire du canal à faible capacité grâce à un serveur mandataire (222), mises à jour qui peuvent également être reçues au niveau du dispositif sans fil par l'intermédiaire du canal à haute capacité, le dispositif sans fil comprenant également:
des moyens pour accéder au canal à haute capacité grâce à un dispositif de réseau (232) lorsque le dispositif sans fil est en communication avec le dispositif de réseau,
le serveur mandataire étant contacté par l'intermédiaire du canal à haute capacité pour être averti que le dispositif sans fil a accès au canal à haute capacité, et le dispositif sans fil comprenant en outre
des moyens pour recevoir des notifications du serveur de notifications par l'intermédiaire du canal à haute capacité jusqu'à ce que le dispositif sans fil n'ait plus accès au canal à haute capacité, les notifications étant réacheminées par le serveur mandataire par l'intermédiaire du canal à haute capacité.

54. Dispositif sans fil tel que défini dans la revendication 53, comprenant également des moyens pour recevoir des notifications par l'intermédiaire du canal à faible capacité lorsque le canal à haute capacité n'est pas accessible au dispositif sans fil.

55. Dispositif sans fil tel que défini dans la revendication 53 ou 54, dans lequel les moyens pour accéder au canal à haute capacité comprennent également des moyens pour connecter le dispositif sans fil au niveau d'une station d'accueil, la station d'accueil comportant une liaison de communication avec le dispositif de réseau, qui assure au dispositif sans fil un accès au canal à haute capacité grâce au dispositif de réseau.

56. Dispositif sans fil tel que défini dans l'une quelconque des revendications 53 à 55, adapté pour recevoir des notifications par l'intermédiaire du canal à faible capacité lorsque le dispositif sans fil perd l'accès au canal à haute capacité.

57. Dispositif sans fil tel que défini dans la revendication 36, dans lequel le serveur de notifications envoie une notification au dispositif sans fil grâce à un serveur mandataire (222) par l'intermédiaire du canal à faible capacité, la notification pouvant être acheminée par l'intermédiaire du canal à haute capacité lorsque celui-ci est accessible, le dispositif sans fil comprenant en outre:
des moyens pour détecter que le dispositif sans fil a accès au canal à haute capacité, et
des moyens pour envoyer un avertissement d'accès au serveur mandataire, avertissement d'accès qui informe le serveur mandataire que le dispositif sans fil a accès au canal à haute capacité;
le serveur mandataire acheminant la notification au dispositif sans fil par l'intermédiaire du canal à haute capacité au lieu du canal à faible capacité, et reprenant l'envoi de la notification au dispositif sans fil par l'intermédiaire du canal à faible capacité lorsque le dispositif sans fil n'a plus accès au canal à haute capacité.

58. Dispositif sans fil tel que défini dans la revendication 57, adapté pour recevoir du serveur mandataire des notifications formatées pour être transmises par l'intermédiaire du canal à haute capacité.

59. Dispositif sans fil tel que défini dans la revendication 57 ou 58, dans lequel les moyens pour détecter le canal à haute capacité comprennent également des moyens pour connecter le dispositif sans fil au réseau à haute capacité par l'intermédiaire d'une liaison de communication.

60. Dispositif sans fil tel que défini dans la revendication 59, dans lequel la liaison de communication est fournie par un dispositif de réseau, la liaison de communication étant une liaison série, une liaison par bus série universel, une liaison Bluetooth sans fil ou une liaison infrarouge.

61. Dispositif sans fil tel que défini dans la revendication 36, dans lequel le système comprend également un dispositif de réseau (232), le dispositif sans fil comprenant en outre:
des moyens pour détecter le canal à haute capacité, le dispositif sans fil ayant accès au canal à haute capacité par l'intermédiaire d'un dispositif de réseau;
des moyens pour avertir le serveur de notifications que le dispositif sans fil peut recevoir des notifications par l'intermédiaire du canal à haute capacité; et
des moyens pour recevoir des notifications par l'intermédiaire du canal à haute capacité, le dispositif de réseau transmettant les notifications au dispositif sans fil.

62. Dispositif sans fil tel que défini dans la revendication 61, comprenant également:
des moyens pour détecter que le dispositif sans fil n'a plus accès au canal à haute capacité; et
des moyens pour recevoir des notifications par l'intermédiaire du canal à faible capacité lorsque le canal à haute capacité est inaccessible au dispositif sans fil.

63. Dispositif sans fil tel que défini dans la revendication 61 ou 62, comprenant également:
des moyens pour envoyer un accusé de réception au serveur de notifications pour chaque notification reçue par le dispositif sans fil;
le serveur de notifications déterminant que le dispositif sans fil n'a plus accès au canal à haute capacité si un accusé de réception particulier pour une notification particulière n'est pas reçu pendant une période de temps.

64. Dispositif sans fil tel que défini dans l'une quelconque des revendications 61 à 63, comprenant également des moyens pour connecter le dispositif sans fil par sa station d'accueil au dispositif de réseau.

65. Système comprenant un dispositif sans fil (210) et un serveur de notifications (202), le dispositif sans fil étant apte à recevoir des notifications du serveur de notifications par l'intermédiaire d'un canal à faible capacité, notifications qui sont acheminées par l'intermédiaire d'un canal à haute capacité à chaque fois que le canal à haute capacité est accessible au dispositif sans fil, le dispositif sans fil comprenant des moyens pour détecter le canal à haute capacité, des moyens pour avertir le serveur de notifications que le dispositif sans fil a accès au canal à haute capacité et des moyens pour recevoir les notifications du serveur de notifications par l'intermédiaire du canal à haute capacité.

66. Système tel que défini dans la revendication 65, dans lequel le dispositif sans fil est en outre conçu conformément à l'une quelconque des revendications 37 à 64.
